## Europäisches Patentamt

## European Patent Office

## Office européen des brevets

(19)

(11) Veröffentlichungsnummer: **0 154 145**
**B1**

# (12) EUROPÄISCHE PATENTSCHRIFT

(45) Veröffentlichungstag der Patentschrift:
14.12.88

(51) Int. Cl.⁴: **B 01 D 53/36,** F 01 N 3/28

(21) Anmeldenummer: 85100760.9

(22) Anmeldetag: 25.01.85

(54) **Einrichtung zur Reinigung der Abgase von Dieselmotoren.**

(30) Priorität: 28.02.84 DE 3407172

(43) Veröffentlichungstag der Anmeldung:
11.09.85 Patentblatt 85/37

(45) Bekanntmachung des Hinweises auf die Patenterteilung:
14.12.88 Patentblatt 88/50

(84) Benannte Vertragsstaaten:
AT BE CH FR GB IT LI LU NL SE

(56) Entgegenhaltungen:
DE-A-3 203 237
DE-A-3 232 729
DE-B-1 594 716

(73) Patentinhaber: **Degussa Aktiengesellschaft,
Weissfrauenstrasse 9, D-6000 Frankfurt am Main
1 (DE)**

(72) Erfinder: **Domesle, Rainer, Dr., Wingertstrasse 202,
D-6457 Maintal (DE)**
Erfinder: **Engler, Bernd, Dr., Vosswaldstrasse 3,
D-6450 Hanau 9 (DE)**
Erfinder: **Koberstein, Edgar, Dr., Wolfskernstrasse
8, D-8755 Alzenau (DE)**
Erfinder: **Völker, Herbert, Bogenstrasse 43, D-6450
Hanau 11 (DE)**

**Beschreibung**

Die Erfindung betrifft eine Einrichtung zur Reinigung der Abgase von Dieselmotoren von oxidierbaren festen, flüssigen und gasförmigen Schadstoffen.

Dieselmotoren emittieren neben den auch von Ottomotoren ausgestoßenen Schadstoffen, wie Kohlenwasserstoffen, Stickoxiden und CO, bedingt durch ihre Betriebsweise, auch Rußteilchen bzw. feinste Kondensattröpfchen oder ein Konglomerat von beiden ("particulates"). Diese "particulares", im folgenden einfach als "Dieselruß" oder schlicht "Ruß" bezeichnet, sind besonders reich an kondensierbaren, polynuklearen Kohlenwasserstoffen, von denen einige als krebserregend erkannt worden sind.

Zur Verminderung der Partikelemissionen wurde z. B in Amerika eine Limitierung der Partikelmassen im Abgas eingeführt. So darf in Kalifornien ab Modelljahr 1986 die Partikelemission den Grenzwert von 0,2 g/Meile nicht überschreiten. Dies kann allein durch innermotorische Maßnahmen nicht erreicht werden. Für eine technische Lösung müssen daher Abgasnachbehandlungseinrichtungen herangezogen werden.

Es ist schon vorgeschlagen worden, Dieselruß in Filtern einzufangen und diese durch periodisches Abbrennen der angesammelten Partikel zu regenerieren. Die Betriebsweise eines Dieselmotors beeinflußt, wie durch thermogravimetrische Analyse von Partikeln im Filter festgestellt werden konnte, insoweit die Zusammensetzung des in Filtern abgeschiedenen Dieselrußes, als dieser unter den relativ hohen Abgastemperaturen bei hoher Motorlast überwiegend Kohlenstoffpartikel, unter den relativ niedrigen Abgastemperaturen bei niedriger Motorlast aber neben den Kohlenstoffpartikeln noch erhebliche Anteile an verflüchtigbaren Stoffen enthält. Bei hoher Motorlast wird daher aus einem gegebenen Abgasvolumen weniger Dieselruß abfiltriert, während flüchtige Dieselrußbestandteile das heiße Filter gasförmig passieren.

Unter normalen Betriebsbedingungen reichen die Temperaturen von Dieselabgasen zum Abbrennen des angesammelten Rußes nicht aus - dazu sind je nach motor- bzw. belastungsbedingter Rußzusammensetzung mindestens 500 - 600°C nötig. Es muß daher fur eine rechtzeitige Erhöhung der Abgastemperatur zur Regenerierung des Filters gesorgt werden, um eine zu starke Akkumulation von Ruß und damit Erhöhung des Abgasgegendrucks bis zur Verstopfung zu vermeiden. Dies kann u. a. so geschehen, daß das im Motor gebildete Luft/ Kraftstoff-Gemisch periodisch angefettet wird und damit höhere Abgastemperaturen erzeugt werden.

Eine andere Möglichkeit sieht die Anordnung eines Brenners im Abgassystem vor dem Filter vor, welcher bei Bedarf gezündet wird und das Filter auf die für den Rußabbrand benötigte Temperatur heizt.

Diese Lösungswege sind aber mit zusätzlichem Brennstoffverbrauch verbunden und reduzieren damit teilweise einen wichtigen Vorteil des Dieselmotors. In der DE 31 41 713 A 1 ist bereits vorgeschlagen worden, die Zündtemperatur von Dieselruß durch Ausrüstung eines Rußfilters bzw. einer Rußfalle mit speziellen Katalysatoren herabzusetzen, wodurch sich insbesondere eine wesentliche Verminderung des Brennstoffverbrauchs während der Regenerationsphase des Filters erreichen läßt. Ein hierfür geeigneter Katalysator ist z. B. Silbervanadat oder -perrhenat. Er kann, gegebenenfalls in Kombination mit einem Trägermaterial, auf ein Filterelement aufgebracht werden, welches neben seiner eigentlichen Funktion diejenige eines strukturellen Verstärkers für den Katalysator übernimmt. In Betracht kommende Filtersysteme sind z. B. eine Packung aus temperaturbeständiger Metall- oder Mineralwolle, ein Filterelement gemäß DE 29 44 841 A 1 oder DE 29 51 316 A 1 oder ein von parallelen Strömungskanälen durchzogener Keramikmonolith, bei dem jeweils ein an einer Stirnfläche offener Kanal auf der anderen Stirnfläche verschlossen ist, so daß die makroporös ausgebildeten Kanalwandungen als Filterflächen wirken.

Die beschriebenen, mit Katalysator ausgerüsteten Filtersysteme haben gemeinsam, daß sie in der sogenannten Rußbeladungsphase den Ruß, genauer den nach dem jeweiligen Betriebszustand überhaupt abfiltrierbaren Abgasanteil, auf ihren Filterflächen ansammeln, bis beim Auftreten von Temperaturspitzen im Abgas die Zündung mit der anschließenden Abbrennphase erfolgt. Die Temperaturspitzen können absichtlich, z. B. durch Gemischüberfettung herbeigeführt werden.

Die Zündtemperaturen werden durch die katalytische Aktivierung bei Sauerstoffgehalten des Abgases von ca. 2 - 14 Vol.% im allgemeinen um ca. 50 - 80°C erniedrigt und es wird eine vollständige Abreinigung des Filters erzielt, welche bislang als "vollständiger Rußabbrand" gedeutet wurde.

Indessen hat sich gezeigt, daß mit den zündtemperatursenkenden Katalysatoren keine vollständige Durchoxidation anströmender flüchtiger Dieselrußkomponenten sowie des während einer Rußbeladungsphase am Filter angesammelten und dann gezündeten Dieselrußes erzielt werden kann und bei den Abbrandbedingungen gegebenenfalls an den Kohlenstoffpartikeln adsorbierte Kohlenwasserstoffe, meist mehrkernige Aromaten, verflüchtigt oder eventuell sogar zu teilweise flüchtigen Produkten gespalten oder unvollständig oxidiert werden.

Als Folge davon ist nicht nur ein Anstieg der Emission von Kohlenmonoxid und eventuell sogar von bei normaler Außentemperatur flüchtigen Kohlenwasserstoffen in einem erheblichen Ausmaß über die sonst an sich günstig beurteilte Emission des Dieselmotors hinaus zu beobachten, sondern beim "Abbrand" verdampfte, bei normaler Außentemperatur nichtflüchtige Kohlenwasserstoffe passieren das Filter gasförmig, kondensieren beim Eintritt in die Umgebungsluft und vergrößern damit die Emission an "particulates" in unerwünschtem Maße. Erkennbar wird der Abbrennvorgang durch ein sprunghaftes Absinken des Abgasgegendrucks vor dem Filter.

Es ist schon versucht worden, diesem Problem dadurch zu begegnen, daß die dort beschriebenen, nach dem zweistufigen Rußbeladungs- und Abbrandzyklus arbeitenden Filtereinheiten auf ihrer Abgaseintrittsseite mit

2

einem Zündkatalysator und auf ihrer Abgasaustrittsseite mit einem Edelmetallkatalysator belegt werden.

Die konstruktive Ausbildung dieser auf der stromaufwärtigen Seite einer Filtermembran mit dem Zündkatalysator und auf deren stromabwärtiger Seite mit dem Edelmetallkatalysator versehenen einstückigen Systeme war jedoch insoweit verbesserungsbedürftig, als die beiden unterschiedlichen Katalysatorschichten auf Vorder- und Rückseite der Membran bzw. der Membranen eines solchen Filters nur schwierig und umständlich anzubringen sind und diese vom zu reinigenden Abgas jeweils nur ein einziges Mal durchströmt werden, wodurch sowohl die Rußrückhaltung als auch die Nachverbrennung flüchtiger Schadstoffe begrenzt und die Grenzfläche zwischen beiden Katalysatorarten thermisch außerordentlich stark belastet wird.

Der Erfindung liegt daher das Prinzip zugrunde, für jede der beiden Katalysatorarten ein selbständiges Filterelement als struktureller Verstärker vorzusehen und die verschiedenen aktivierten Einzelelemente in Form einer mehrfachen Aufeinanderfolge zu schalten.

Die Erfindung betrifft demgemäß eine Einrichtung zur Reinigung der Abgase von Dieselmotoren mit einem im Querschnitt eines vom Abgas durchströmten Gehäuses angeordneten Filter, welcher mit einem die Zündtemperatur ausgefilterter Rußteilchen senkenden und ihren Abbrand fördernden sowie mit einem die Verbrennung gasförmiger Schadstoffe fördernden Katalysator versehen ist, welche dadurch gekennzeichnet ist, daß in dem Gehäuse unmittelbar oder im Abstand hintereinander Filterelemente zur Abtrennung der Rußteilchen angeordnet sind, wobei mindestens ein Filterelement A, welches den die Zündtemperatur des Rußes senkenden und seinen Abbrand fördernden Katalysator trägt und mindestens ein Filterelement B, welches den die Verbrennung gasförmiger Schadstoffe fördernden Katalysator trägt, einander mehrfach abwechseln.

Um den die Verbrennung gasförmiger Schadstoffe fördernden Katalysator vor einer inaktivierung durch abgeschiedene "particulates" zu bewahren, sieht eine vorzugsweise Ausführungsform der Erfindung vor, daß eine Serie alternierender einzelner Filterelemente oder Filterelementgruppen der Spezies A und B in Richtung des Abgasstroms mit einer Spezies A beginnt und mit einer Spezies B endigt. Diese schließt eine umgekehrte Anordnung nicht aus.

Im allgemeinen werden Filterelemente der Spezies A bzw. B in gleicher geometrischer Form eingesetzt; bei entsprechender Gestaltung des Gehäuses können jedoch auch Elemente unterschiedlicher geometrischer Form nacheinander angeordnet werden. Es hat sich als günstig erwiesen, wenn Filterelemente A bzw. B gleicher geometrischer Form in einem Abstand von höchstens der doppelten Stärke des Pilterelements aufeinander folgen. Das Abgas wird dadurch bei jedem Austritt aus einem Filterelement in den Zwischenraum erneut verwirbelt, was die Konversion der Schadstoffe günstig beeinflußt.

Durch die kaskadenartige Anordnung mehrerer Filterelemente der verschiedenen Spezies wird nicht nur die Filtration und Konversion der "particulates" und die Nachverbrennung vorhandener oder gebildeter gasförmiger Schadstoffe mehrfach wiederholt, sondern auch die in vorderen Abschnitten der Abgasreinigungseinrichtung entwickelte Wärme in hinteren Abschnitten nutzbar gemacht. Dies ermöglicht, den strömungswiderstand des Filters herabzusetzen und bei mittleren und höheren Betriebslasten unter Verzicht auf eine ausgeprägte "Rußbeladungsphase", einen weitgehend kontinuierlichen Umsatz der "particulates" auf ihrem Weg durch die Abgasreinigungseinrichtung herbeizuführen.

Allgemein verwendbare Filterelemente können sein: Offenporig gesinterte Keramikscheiben; Scheiben aus gepreßter Keramikfaser, insbesondere $Al_2O_3$-, $SiO_2$-, Aluminiumsilikatoder $ZrO_2$-Faser; Scheiben aus Sintermetall; Scheiben aus gepreßter Stahlwolle; Schüttkörperschichtungen aus temperaturbeständigem keramischen oder metallischen Material.

Als besonders geeignetes Filterelement für ein Gehäuse beliebigen, vorzugsweise kreisförmigen Querschnitts kann dafür eine gegebenenfalls mit einer metallischen Einfassung als Halterung umgebene flache Scheibe aus verdichtetem Drahtgewebe verwendet werden, welche bei axialem Pressen eines in mehreren Lagen aus einem endlosen, hochtemperaturfesten und korrosionsunempfindlichen Draht geflochtenen Strumpfes resultiert. Solche Filterelemente sind in der DE-3 203 237 A 1 im einzelnen beschrieben.

Der Katalysator für das Filterelement A, welcher das Zünden und Abbrennen der "particulates" fördern soll, besteht gemäß einer Ausgestaltung der Erfindung, der auch selbständige Bedeutung zukommt, aus einer oder mehreren der nachstehenden, für diesen Sonderfall einer heterogenen Katalyse der Umsetzung eines teilchenförmigen Stoffs mit einem gasförmigen Oxidationsmittel als überaus wirksam befundenen Zusammensetzungen a) bis e):

a)    Lithiumoxid,
b)    Vanadinpentoxid,
c)    Vanadinpentoxid plus Oxid eines oder mehrerer der Elemente
      Li, Na, K, Rb, Cs;
      Mg, Ca, Sr, Ba;
      B, Al;
      Si, Sn;
      Sb, Bi;
      Cu, Ag;
      Zn;
      Sc, Y, La, Ce, Pr, Nd, Tb;
      Ti, Zr, Hf;

Nb;
Cr, Mo, W;
Mn, Re;
Fe, Co, Ni,

wobei der Oxidzusatz vorzugsweise 1 - 30 Gew.-%, bezogen auf $V_2O_5$ beträgt,

d) Vanadat von einem oder mehreren der unter c) für den Oxidzusatz aufgeführten Metalle und

e) Perrhenat, vorzugsweise von Li, K, Ag, V.

Der zum Einsatz kommende Katalysator dieses Typs kann mit einem temperaturbeständigen Trägermaterial kombiniert sein, wobei dieses entweder mit dem Katalysator vermischt ist oder, aufgebracht auf dem Filterelement, dem Katalysator als Unterlage dient. Geeignete Trägermaterialien, welche einzeln oder in Abmischungen verwendet werden können, sind z. B. MgO, $Al_2O_3$, insbesondere $\gamma$-$Al_2O_3$, $CeO_2$, $SiO_2$, $SnO_2$, $TiO_2$, $ZrO_2$, $HfO_2$, $ThO_2$, $Nb_2O_5$, $WO_3$, Magnesiumsilikat, Aluminiumsilikat und/oder Magnesiumtitanat oder Kombinationen davon.

Von besonderer Bedeutung ist die Wahl des Werkstoffes für das Filterelement A. Es wurde gefunden, daß sich Werkstoffe mit chemischen Zusammensetzungen (in Gew.-%) wie

|   | C | Mn | P | S | Cr | Si | V | Co | Al | Zr | Y |
|---|---|----|---|---|----|----|---|----|----|----|---|
| a) | 0,09 | 0,29 | 0,02 | 0,02 | 12,93 | 0,22 | 0,03 | 0,48 | 5,05 | 0,15 | 0 |
| b) | 0,11 | 0,30 | 0,02 | 0,02 | 13,17 | 0,22 | 0,07 | 0,56 | 4,92 | 0,23 | 0 |
| c) | 0,03 | 0,31 | 0,02 | 0,00 | 20,0 | 0,44 | 0,12 | 0,48 | 4,3 | - 0,12 | 0 |
|   | oder auch |  |  |  |  |  |  |  | 5,3 |  |  |
| d) | 0,17 | 0,28 | 0,02 | 0,02 | 15,39 | 0,32 | 0,02 | 0,34 | 5,53 | 0,005 | 0,45 |

(Werkstoffe a) und b) entsprechen DIN 1.4725 und Werkstoff c) der DIN 1.4767), ferner Eisenlegierungen mit hohem Nickelgehalt, Eisenlegierungen mit einem Nickelüberzug sowie Aluminium-beschichtete oder mit einer Aluminium-Diffusionsschicht überzogene Eisenlegierungen besonders gut eignen.

Als Katalysator für das Filterelement B kann eines oder mehrere Platingruppenelemente, gegebenenfalls zusammen mit einem oder mehreren Unedelmetallen, in Kombination mit einem temperaturbeständigen Trägermaterial, vorzugsweise MgO, $Al_2O_3$, insbesondere $\gamma$-$Al_2O_3$, $CeO_2$, $SiO_2$, $SnO_2$, $TiO_2$, $ZrO_2$, $HfO_2$, $ThO_2$, $Nb_2O_5$, $WO_3$, Magnesiumsilikat, Aluminiumsilikat und/oder Magnesiumtitanat oder Kombinationen davon eingesetzt werden, wobei das Trägermaterial entweder mit dem Katalysator vermischt ist oder auf dem Filterelement aufgebracht, dem Katalysator als Unterlage dient.

Als Werkstoff für das Filterelement B wird ein Aluminiumhaltiger Chromstahl bevorzugt, welcher durch Tempern an Luft bei Temperaturen von 800 - 1300°C mit einer haftfesten Aluminiumoxidschicht überzogen werden kann. Auf dieser verankerungsschicht werden dann Trägermaterial und katalytisch aktive Komponente gleichzeitig oder nacheinander nach bekannten Methoden aufgebracht.

Die Erfindung wird nachfolgend anhand von Ausführungsbei spielen in Verbindung mit der Zeichnung näher erläutert. In dieser zeigt

Figur 1 ein 12 Filterelemente enthaltendes Abgasfilter;

Figur 2 den Verlauf der Rußsammel- und Abbrennphase bei einer Serie von 12 unbeschichteten Filterelementen;

Figur 3 den Verlauf der Rußsammel- und Abbrennphase bei einer Serie von 12 Filterelementen der Spezies A;

Figur 4 den Verlauf der Rußsammel- und Abbrennphase bei einer Serie von 6 Filterelementen der Spezies A, gefolgt von 6 Filterelementen der Spezies B und

Figur 5 den Verlauf der Rußsammel- und Abbrennphase bei einer Serie von 12 Filterelementen der Spezies A und B, wobei jeweils ein Element der Spezies A mit einem Element der Spezies B einander abwechseln.

Für die Durchführung der Ausführungsbeispiele wurde jeweils ein Abgasfilter aus einem zylinderförmigen Blechgehäuse aus Chrom-Nickelstahl verwendet, welches an den Frontseiten jeweils mit einem zu einem Rohrstutzen für den Abgaseintritt bzw. -austritt konisch zulaufenden Deckel verschlossen war und in dem zylinderförmigen Innenraum jeweils 12 hintereinander angeordnete Filterelemente aus Drahtgestrickscheiben gemäß DE-3 203 237 A 1 der Knecht Filterwerke GmbH, 7000 Stuttgart, enthielt, wobei diese Filterelemente mit ihrem Umfang eng an der Gehäusewand anlagen.

Die Drahtgestrickscheibe aus Werkstoff 1.4767 (Zusammensetzung in Gew.-%: C 0,03, Mn 0,31, P 0,02, S 0,00, Cr 20,0, Si 0,44, V 0,12, Co 0,48, Al 4,8, Zr 0,12) hatte einen Durchmesser von 72 mm, eine Dicke von 3,2 mm und wog 10,2 g. Sie war durch exaktes Pressen eines in mehreren Lagen aus einem 75 m langen Draht von 0,15 mm Dicke geflochtenen Strumpfes gefertigt.

Zur Herstellung von Filterelementen der Spezies A wurden die Drahtgestrickscheiben zunächst 1 Stunde bei 700°C vorgetempert, danach bei Raumtemperatur in einem pulverförmigen Gemisch aus 99 Gewichtsteilen Vanadinpentoxid (Reinheit 97 %) und 5 Gewichtsteilen Silbervanadat gewälzt und der dabei erzeugte Belag 30 min. bei 700°C behandelt. Dabei entstand eine festhaftende, geschlossene Katalysatorschicht von 1 - 10 µm Dicke (Katalysatormasse je Scheibe = ca. 2 g).

Zur Herstellung von Filterelementen der Spezies B wurden pro Scheibe 9 g $\gamma$-$Al_2O_3$ und 0,07 g Platin aufgebracht. Die Aufbringung des Aluminiumoxids erfolgte durch Tauchen der Scheibe in einer 30 Gew. %-igen wäßrigen Aluminiumoxiddispersion, Ausblasen und Trocknen bei 200°C, wobei diese Vorgänge 3 - 6 mal wiederholt wurden. Der Katalysatorbelag wurde daraufhin 120 min. bei 700°C getempert. Die Aufbringung des Platins erfolgte durch mehrmaliges Imprägnieren der $Al_2O_3$-gecoateten Drahtgestrickscheibe mit einer wäßrigen Lösung von $[Pt(NH_3)_4]$ $(OH)_2$ und Trocknen bei 200°C sowie durch darauffolgendes 1-stündiges Calcinieren bei 500°C und eine abschließende 2-stündige Reduktionsbehandlung in Formiergas (Zusammensetzung: 95 Vol.-% $N_2$ + 5 Vol.-% $H_2$) bei 550°C.

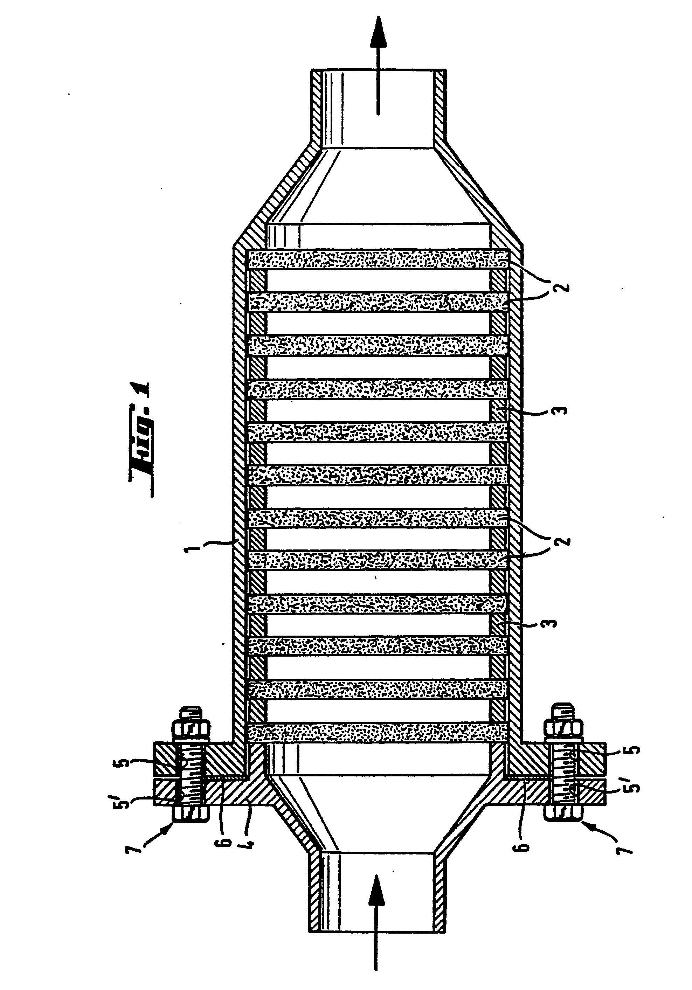

Für die einzelnen Versuche wurden jeweils 12 Filterelemente in unbeschichteter Form oder gemäß den Spezies A und B in dem in Figur 1 gezeigten Gehäuse untergebracht.

Nach Figur 1 besteht der in den Beispielen verwendete Testkonverter aus einem zylindrischen Gehäuseteil 1 aus Werkstoff 1.4571, das am anströmseitigen Ende einen zur Gehäuselängsachse senkrecht ausladenden Flansch mit 6 gleichverteilten Bohrungen 5 zur Aufnahme einer Schraubbolzenverbindung 7 aufweist.

Am abströmseitigen Ende verläuft das Gehäuse mit einem Konus zu einem zylindrischen Austrittsstutzen für das Abgas, auf den die rückwärtige Auspuffleitung aufgesteckt wird.

Im Gehäuseteil 1 sind hintereinander, jeweils in einem Abstand von 6 mm, 12 der vorhin erläuterten scheibenförmigen Filterelemente 2 der gewünschten Spezies eingesetzt. Ihre Umfange liegen dem Gehäusemantel eng an. Die Abstände zwischen den Filterscheiben werden durch eingeschobene Zwischenringe 3 aus Werkstoff 1.4571 gehalten. Die Abstände dienen zur Verbesserung der Gasdurchmischung.

Auf der Anströmseite des Konverters ist das Gehäuseteil 1 mit einem Anströmkopf 4 aus demselben Material verbunden. Der Anströmkopf besteht aus einem in den Innenmantel des Gehäuses eingepaßten und in diesen einschiebbaren Ring (Länge entspricht etwa der Stärke des Gehäuseflansches), welcher mit einem zum Eintrittsstutzen für das Abgas zulaufenden Konus verbunden ist. In den Abgaseintrittsstutzen wird die vom Motor kommende Auspuffleitung eingesteckt. An dem Konus des Kopfteils ist ein mit 6 Bohrungen 5' zur Aufnahme der genannten Schraubbolzenverbindung 7 versehener Gegenflansch zum Flansch des Gehäuses 1 so angebracht, daß seine Dichtfläche in der durch den Ringansatz am Konus verlaufenden Ebene liegt. Zwischen den beiden Flanschen ist eine Dichtscheibe 6 aus Asbest (Montanit ®) vorgesehen.

Durch das Anziehen der Schraubbolzen 7 werden die Filterelemente 2 über die Zwischenringe 3 zusammengepreßt. Sie legen sich dadurch an ihrem Umfang noch enger an den Innenmantel des Gehäuses an, womit ein Bypaß des Abgases vermieden wird und das gesamte Abgas gezwungen wird, sämtliche Filterelemente zu passieren.

Das montierte Abgasfilter wird in die Auspuffleitung eines mit einer Wasserwirbelstrombremse mit elektrischer Drehzahlund Lastregelung versehenen Dieselmotors mit folgenden Daten eingebaut:

VW - 4 - Zylinder - Diesel-Motor
Leistung: 40kW
Hubvolumen: 1500 $cm^3$
Höchstdrehzahl unbelastet: 5.550 Umdreh./Min.
Leerlaufdrehzahl: 825 Umdreh./Min.

Die Abgasanalyse umfaßt eine Bestimmung von HC, CO, $NO_x$ vor und nach dem Abgasfilter sowie eine Rußmeßung nach dem Filter mittels eines Opacimeters (Trübungsmesser).

Der Abgasgegendruck (Druckverlust) vor dem Filter wird mittels eines Dosen-Kontakt-Manometers und die Abgastemperatur vor Filter mit einem Ni-Cr-Ni-Thermoelement erfaßt.

Für die in den Beispielen geschilderten Tests wurde unter Verwendung vorstehend erläuterter Prüfanlage folgendes Meßverfahren angewandt:

Der Dieselmotor wird zu Beginn auf eine konstante Last und Drehzahl eingestellt und so lange unter diesen Bedingungen betrieben, bis ein Ladedruck am Filter von 150 mbar erreicht ist (Sammelphase). Die dafür erforderliche Zeit sowie die anderen Parameter werden kontinuierlich von einem 6-Kanalschreiber aufgezeichnet.

Vor Beginn des eigentlichen Prüfzyklus erfolgt die Ermittlung der Ruß-Zündtemperatur, indem die Last vom Ladedruck 150 mbar aus stufenweise bis zum Erreichen eines Gleichgewichtsdruckes (Zünddruck $P_z$) gesteigert wird. Als Zündtemperatur $T_z$ wird diejenige Abgastemperatur definiert, bei der unter konstant gehaltenen Motorbetriebsbedingungen kein weiterer Druckanstieg mehr stattfindet, d. h. der sich am Filter ablagernde bzw. am Filter ankommende Ruß sofort wieder verbrennt.

Nach 5 Minuten Betrieb unter konstanten Bedingungen wird die Motorlast angehoben, bis die oberhalb $T_z$ liegende Regenerationstemperatur erreicht ist. Dann beginnt der abgelagerte Ruß zu verbrennen und der Druck vor dem Filter sinkt rasch bis zu einem Grenzwert des Regenerationsgrades ab, der je nach Filtertyp bzw. -anordnung verschieden ist. Nach 20 Minuten wird die Regeneration als beendet angesehen und danach der Zyklus wiederholt.

Die Zeit vom Beginn der Regeneration bis zum Erreichen des Enddruckes wird für die Bewertung der Katalysatorbeschichtung(en) herangezogen. Sie charakterisiert die Ruß-Abbrenngeschwindigkeit. Für die Auswertung wird ein aus der Summe von Einzelzyklen gebildeter Mittelwert verwendet.

Neben der Ruß-Zündtemperatur wird auch die Partikelabscheidung mit Hilfe eines der Filtereinrichtung (Testkonverter) nachgeschalteten Trübungsmessers (Opacimeter) bestimmt.

## Beispiel 1

Das Beispiel beschreibt den Verlauf der Partikel-Sammelund Abbrennphase bei einer Serie von 12 nicht mit Katalysator beschichteten Filterelementen.

12 Filterelemente der beschriebenen Konstruktion, ohne katalytische Beschichtung, wurden in dem in Figur 1 dargestellten Konverter an der Prüfanlage mit Dieselabgas beaufschlagt.

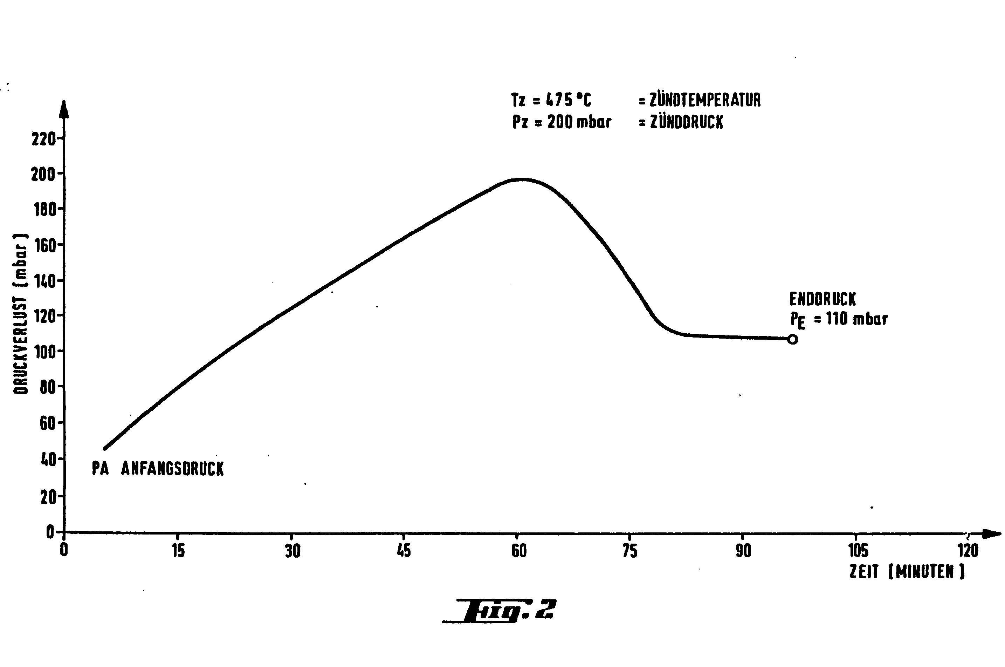

Die gemessenen Daten sind aus der den Beispielen nachgestellten Tabelle und aus Figur 2 zu ersehen. Es ergibt sich:

In der sog. Sammelphase, die bei konstanter Drehzahl und Motorlast abläuft, beladen sich die Filterelemente mit den im Abgas enthaltenen Rußpartikeln, wodurch der Druckverlust (bzw. Abgas-Gegendruck) im System zunimmt. Bei Erhöhung der Motorlast stellen sich Gleichgewichtsdruck $P_Z$ und Gleichgewichtstemperatur $T_Z$ allmählich ein.

Bei weiterer Anhebung der Motorlast steigt die Abgastemperatur an, wodurch sich der Abbrand der Rußpartikel beschleunigt. Als Folge davon fällt die Druckverlustkurve relativ steil ab und verläuft sodann bis zur Erreichung des Enddruckes $P_E$ nahezu horizontal.

Der Verlauf der in Figur 2 abgebildeten Druckverlustkurve zeigt: Zündtemperatur, Zünddruck und Enddruck liegen hier relativ hoch. Eine Konvertierung von flüchtigen Kohlenwasserstoffen und von CO ist nicht feststellbar. Im Filter erfolgt eine Verringerung der anfänglichen Partikelkonzentration um 74 % durch Abscheidung, entsprechend einer Partikelemission aus dem Filter von 26 % des Ausgangswertes.

## Beispiel 2

Dieses Beispiel zeigt den Verlauf der Ruß-Sammel- und Abbrennphase bei einer Serie von 12 Filterelementen der Spezies A.

Die Filterelemente wurden in den Konverter eingesetzt und an der Prüfanlage getestet. Die Meßdaten sind der den Beispielen nachgestellten Tabelle zu entnehmen.

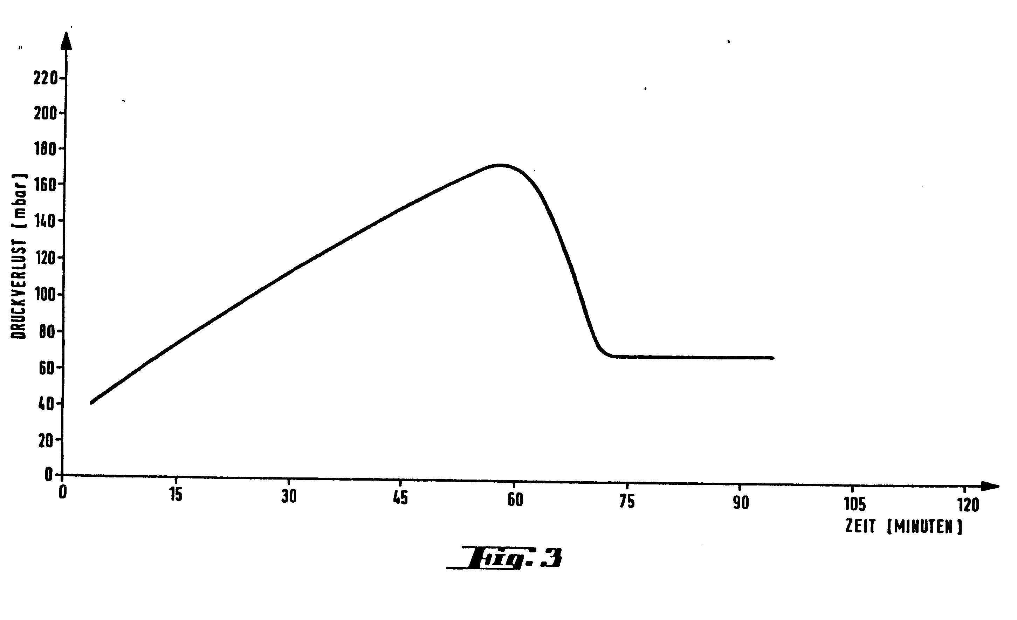

Daraus und aus Figur 3 geht hervor, daß Partikelsammelphase, Rußzündung und Regeneration des Filters etwa wie in Beispiel 1 verlaufen, allerdings mit dem Unterschied, daß hier die Zündung dank der Katalysatorwirkung bereits bei geringerem Druckverlust und niedrigerer Temperatur - und demgemäß auch in kürzerer Zeit - einsetzt.

Die Filterregenerierung verlief vollständiger, erkennbar an der Erreichung eines gegenüber Beispiel 1 erheblich niedrigeren Enddrucks $P_E$.

Die Kohlenwasserstoff- und CO-Konvertierung änderte sich (im Rahmen der Meßgenauigkeit) gegenüber Beispiel 1 nicht, d. h. der Zündkatalysator ist zur Konvertierung dieser Stoffe nicht imstande.

Die gegenüber Beispiel 1 geringere prozentuale Partikelabnahme erklärt sich durch den katalysierten Rußabbrand, der zu einem dünneren und damit schlechter filtrierenden Filterbelag führt.

## Beispiel 3

Das Beispiel beschreibt den Verlauf der Rußsammel- und Abbrennphase bei einer Serie von 6 Filterelementen der Spezies A, gefolgt von 6 Filterelementen der Spezies B.

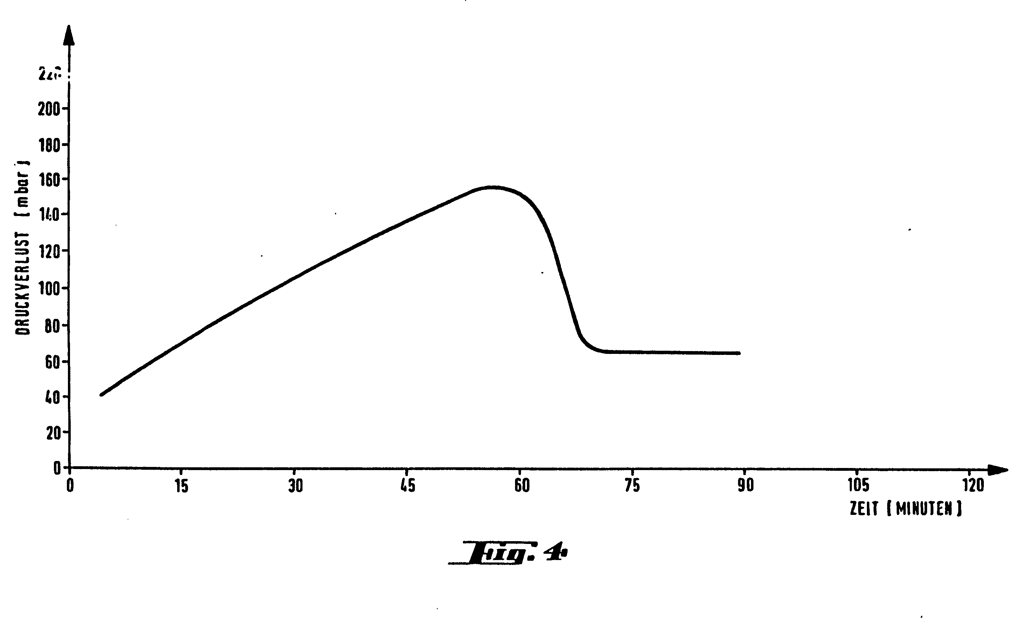

Die Filterelemente der Spezies A, gefolgt von den Filterelementen der Spezies B wurden in den Konverter eingesetzt und an der Prüfanlage getestet. Die Meßdaten sind aus der den Beispielen nachgestellten Tabelle und aus Figur 4 zu ersehen.

Es ergab sich, daß Sammel- und Abbrennphase ähnlich wie in den Beispielen 1 und 2 verlaufen, jedoch mit dem Unterschied, daß die Rußzündung bei einem gegenüber Beispiel 2 noch weiter abgesenkten Druckverlust und bei noch geringerer Abgastemperatur einsetzt.

Nach Abschluß der Regenerierungsphase wurde auch ein weiter abgesenkter Enddruck $P_E$ erreicht. Durch die mitverwendeten Filterelemente der Spezies B konnte ferner eine erhebliche Absenkung der CO- und HC-Konvertierungen erzielt werden. Zusätzlich ergab sich durch die Kombination der beiden Filterelementspezies gegenüber Beispiel 2 eine geringfügige Verbesserung des Filterwirkungsgrades.

**Beispiel 4**

Das Beispiel beschreibt den Verlauf der Rußsammel- und Abbrennphase bei Einsatz von 12 Filterelementen der Spezies A und B, wobei jeweils ein Element der Spezies A mit einem Element der Spezies B einander abwechseln.

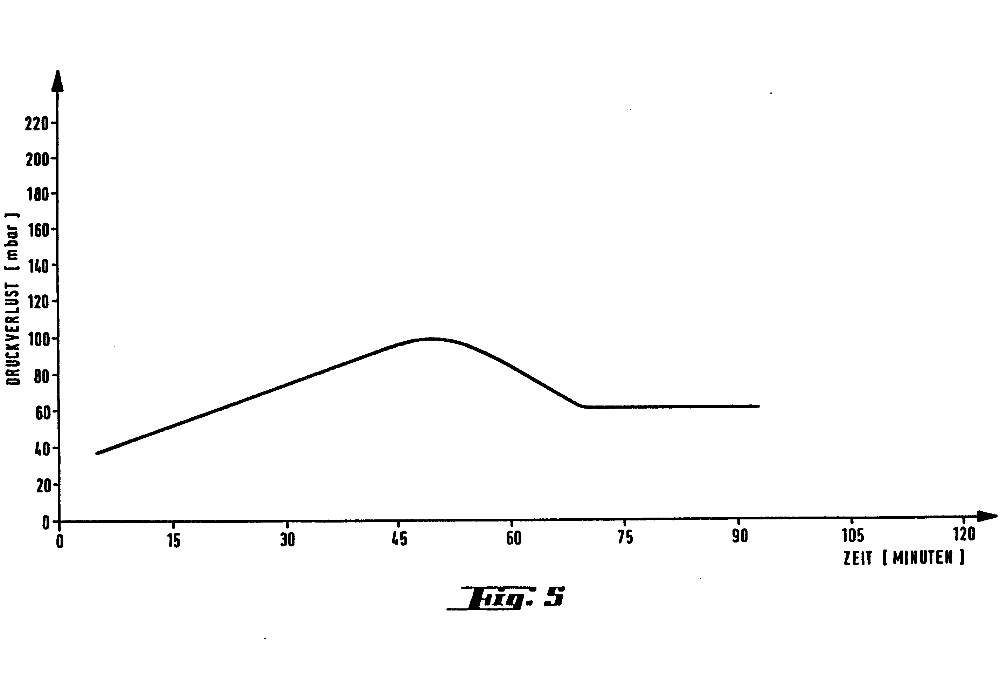

In den Konverter wurden die Elemente in der Reihenfolge A - B - A - B - etc. eingesetzt und das Filtersystem an der Prüfanlage getestet. Die Meßdaten sind aus der nachfolgenden Tabelle und aus Figur 5 zu ersehen.

Der in Figur 5 dargestellte Kurvenverlauf zeigt einen wesentlich flacheren Anstieg des Druckverlustes über die Betriebszeit als bei den vorangegangenen Beispielen. Der Partikelabbrand erfolgte hier schon bei Abgastemperaturen, die bei geringer Motorlast erreicht werden, wobei ein erheblicher Teil der ankommenden Rußpartikel ohne wesentliche Ansammlung sofort am Filter verbrennt.

Dadurch ist hier eine ausgeprägte Rußsammelphase nicht mehr vorhanden, was als wesentlicher Vorteil der alternierenden A - B - A - B -Anordnung zu werten ist.

Das Beispiel veranschaulicht, daß bei alternierender Anordnung von Filterelementen der Spezies A und B die niedrigsten Zündtemperaturen, der geringste Druckanstieg und die größte Kohlenwasserstoff- und Kohlenmonoxid-Konvertierung bei weiterer Verbesserung des Filterwirkungsgrades erreicht werden können.

**Meßdatentabelle zu den Beispielen**

| Beispiel | $P_Z$ (Zünddruck) mbar | $T_Z$ (Zündtemp.) °C | $P_E$ (Enddruck) mbar | Partikel-abnahme % | Partikel-emission % | Abgaskonvertierung bei 400°C % | | |
|---|---|---|---|---|---|---|---|---|
| | | | | | | HC | CO | $NO_x$ |
| 1 (Fig. 2) | 200 | 475 | 110 | 74 | 26 | * | * | * |
| 2 (Fig. 3) | 175 | 408 | 70 | 63 | 37 | * | * | * |
| 3 (Fig. 4) | 157 | 375 | 65 | 65 | 35 | 72 | 70 | * |
| 4 (Fig. 5) | 100 | 350 | 60 | 68 | 32 | 87 | 87 | * |

* = Werte liegen innerhalb der Meßgenauigkeit, d.h. sie sind vernachlässigbar klein.

Insgesamt geht aus den Beispielen hervor, daß sowohl eine Serienschaltung von Filterelementgruppen der Spezies A und B als auch eine alternierende Anordnung A - B - A - B usw. erhebliche Vorteile gegenüber Filtersystemen erbringen, welche entweder keinen Katalysator oder nur einen Zündkatalysator (für den Abbrand der Rußpartikel) enthalten. In beiden Fällen kann der durch die Filtereinrichtung hervorgerufene Druckverlust niedriger gehalten werden und der Rußabbrand gelingt bereits bei niedrigen Motorlasten.

Dies bedeutet für den praktischen Einsatz im Fahrzeug eine erhöhte Betriebssicherheit der Rußfiltereinrichtung, eine verringerte Schadstoffemission und einen verringerten Treibstoffverbrauch des Motors. Die in Beispiel 4 vorgestellte Ausführungsform der Erfindung ist dabei noch derjenigen von Beispiel 3 überlegen. Indessen übertrifft letztere schon die Effektivität von Systemen, bei denen parallel geschaltete Filtermembranen anströmseitig den Zündkatalysator und abströmseitig den Nachverbrennungskatalysator für flüchtige bzw. verflüchtigte Schadstoffe tragen.

Die für den Katalysator der Filterelemente A entwickelten speziellen Stoffzusammensetzungen schaffen eine entscheidende und auch selbständig in anderem Rahmen verwertbare Voraussetzung für die Bewältigung der durch die relativ kühlen Abgase des Dieselmotors aufgeworfenen Probleme von Rußzündung und -abbrand.

**Patentansprüche**

1. Einrichtung zur Reinigung der Abgase von Dieselmotoren mit einem im Querschnitt eines vom Abgas durchströmten Gehäuses angeordneten Filter, welcher mit einem die Zündtemperatur ausgefilterter Rußteilchen senkenden und ihren Abbrand fördernden sowie mit einem die Verbrennung gasförmiger Schadstoffe fördernden Katalysator versehen ist, dadurch gekennzeichnet, daß in dem Gehäuse unmittelbar oder im Abstand hintereinander Filterelemente zur Abtrennung der Rußteilchen angeordnet sind, wobei mindestens ein Filterelement A, welches den die Zündtemperatur des Rußes senkenden und seinen Abbrand fördernden Katalysator trägt und mindestens ein Filterelement B, welches den die Verbrennung gasförmiger Schadstoffe fördernden Katalysator trägt, einander mehrfach abwechseln.

2. Einrichtung nach Anspruch 1, dadurch gekennzeichnet, daß eine Serie alternierender einzelner Filterelemente oder Filterelementgruppen der Spezies A und B in Richtung des Abgasstroms mit einer Spezies A beginnt und mit einer Spezies B endigt.

3. Einrichtung nach Anspruch 1, dadurch gekennzeichnet, daß Filterelemente A bzw. B gleicher geometrischer Form in einem Abstand von höchstens der doppelten Stärke des Filterelements aufeinander folgen.

4. Einrichtung nach den Ansprüchen 1 bis 3, dadurch gekennzeichnet, daß als Filterelement für ein Gehäuse vorzugsweise kreisförmigen Querschnitts eine gegebenenfalls mit einer metallischen Einfassung als Halterung

7

umgebene fläche Scheibe aus verdichtetem und gegebenenfalls durch punktförmiges Verlöten, Verschweißen oder Versintern formstabilisierten Drahtgewebe verwendet wird, welche bei axialem Pressen eines in mehreren Lagen aus einem "endlosen", hochtemperaturfesten und korrosionsunempfindlichen Draht geflochtenen Strumpfes resultiert.

5. Einrichtung nach den Ansprüchen 1 bis 4, dadurch gekennzeichnet, daß der Katalysator für das Filterelement A aus einer oder mehreren der nachstehenden Zusammensetzungen a) bis e) besteht:
a) Lithiumoxid,
b) Vanadinpentoxid,
c) Vanadinpentoxid plus Oxid eines oder mehrerer der Elemente

Li, Na, K, Rb, Cs;
Mg, Ca, Sr, Ba;
B, Al;
Si, Sn;
Sb, Bi;
Cu, Ag;
Zn;
Sc, Y, La, Ce, Pr, Nd, Tb;
Ti, Zr, Hf;
Nb;
Cr, Mo, W;
Mn, Re;
Fe, Co, Ni,

wobei der Oxidzusatz vorzugsweise 1 - 30 Gew.-%, bezogen auf $V_2O_5$ beträgt,
d) Vanadat von einem oder mehreren der unter c) für den Oxidzusatz aufgeführten Metalle und
e) Perrhenat, vorzugsweise von Li, K, Ag, V.

6. Einrichtung nach Anspruch 5, dadurch gekennzeichnet, daß der Katalysator mit einem temperaturbeständigen Trägermaterial kombiniert ist, wobei dieses entweder mit dem Katalysator vermischt ist oder, aufgebracht auf dem Filterelement, dem Katalysator als Unterlage dient.

7. Einrichtung nach den Ansprüchen 1 bis 6, dadurch gekennzeichnet, daß als Katalysator für das Filterelement B eines oder mehrere Platingruppenelemente, gegebenenfalls zusammen mit einem oder mehreren Unedelmetallen, in Kombination mit einem temperaturbeständigen Trägermaterial, vorzugsweise MgO, $Al_2O_3$, insbesondere $\gamma$-$Al_2O_3$, $CeO_2$, $SiO_2$, $SnO_2$, $TiO_2$, $ZrO_2$, $HfO_2$, $ThO_2$, $Nb_2O_5$, $WO_3$, Magnesiumsilikat, Aluminiumsilikat und/oder Magnesiumtitanat oder Kombinationen davon, eingesetzt werden, wobei letzteres entweder mit dem Katalysator vermischt ist oder, auf dem Filter aufgebracht, dem Katalysator als Unterlage dient.

## Claims

1. A device for purifying the exhaust gases from diesel engines, comprising a filter arranged in the cross-section of a housing through which the exhaust gas flows and provided with a catalyst uh ich lowers the ignition temperature of filtered soot particles and promotes their combustion and with a catalyst which promotes the combustion of gaseous pollutants, characterized in that filter elements for separating off the soot particles are arranged in the housing immediately behind one another or with a distance between them, with at least one filter element A carrying the catalyst which lowers the ignition temperature of the soot and promotes its combustion, and at least one filter element B carrying the catalyst which promotes the combustion of gaseous pollutants, alternating repeatedly with one another.

2. The device according to Claim 1, characterized in that a series of alternating individual filter elements or groups of filter elements of types A and B in the direction of the stream of exhaust gas begins with a type A and ends with a type B.

3. The device according to Claim 1, characterized in that filter elements A and B of the same geometrical shape follow one another at a distance of at most twice the thickness of the filter element.

4. The device according to Claims 1 to 3, characterized in that a flat disc optionally surrounded by a metal enclosure as a holder, and made of compressed wire fabric optionally dimensionally stabilized by spot soldering, welding or sintering, is used as the filter element for a housing preferably of circular cross-section, the said flat disc resulting from the axial compression of a hose plaited in several plies from an "endless" wire resistant to high temperature and corrosion.

5. The device according to Claims 1 to 4, characterized in that the catalyst for the filter element A consists of one or more of the following compositions a) to e):
a) lithium oxide,
b) vanadium pentoxide,
c) vanadium pentoxide plus the oxide of one or more of the following elements:

Li, Na, K, Rb, Cs;
Mg, Ca, Sr, Ba;
B, Al;
Si, Sn;
Sb, Bi;
Cu, Ag;
Zn;
Sc, Y, La, Ce, Pr, Nd, Tb;
Ti, Zr, Hf;
Nb;
Cr, Mo, W;
Mn, Re;
Fe, Co, Ni, the added oxide preferably being 1 - 30 % by weight based on $Y_2O_5$,

d) the vanadate of one or more of the metals listed under c) for the added oxide, and

e) a perrhenate, preferably of Li, K, Ag, V.

6. The device according to Claim 5, <u>characterized in that</u> the catalyst is combined with a heat-resistant support, the latter either being mixed with the catalyst or being applied to the filter element and serving as a base for the catalyst.

7. The device according to Claims 1 to 6, <u>characterized in that</u> one or more platinum group elements, optionally together with one or more base metals, are used as the catalyst for the filter element B, in combination with a heat-resistant support, preferably MgO, $Al_2O_3$, in particular $-Al_2O_3$, $CeO_2$, $SiO_2$, $SnO_2$, $TiO_2$, $ZrO_2$, $HfO_2$, $ThO_2$, $Nb_2O_5$, $WO_3$ magnesium silicate, aluminium silicate and/or magnesium titanate, or combinations thereof, the said support either being mixed with the catalyst or being applied to the filter and serving as a base for the catalyst.

## Revendications

1. Dispositif pour l'épuration des gaz d'échappement de moteurs Diesel, à l'aide d'un filtre disposé en travers d'un carter traversé par le gaz d'échappement, qui est pourvu d'un catalyseur abaissant la température d'ignition de particules de noir de fumée et favorisant leur combustion, ainsi que d'un catalyseur favorisant la combustion de substances gazeuses nocives, caractérisé en ce que, pour la séparation des particules de noir de fumée, des éléments filtrants sont disposés l'un derrière l'autre dans le carter, avec ou sans intervalle, au moins un élément filtrant A, qui porte le catalyseur diminuant la température d'ignition du noir de fumée et facilitant sa combustion, et au moins un élément filtrant B, qui porte le catalyseur facilitant la combustion de substances gazeuses nocives, étant disposés plusieurs fois en alternance.

2. Dispositif selon la revendication 1, caractérisé en ce qu'une série d'éléments filtrants individuels ou de groupes d'éléments filtrants alternés des types A et B, en direction du passage des gaz d'échappement, commence avec un type A et se termine avec un type B.

3. Dispositif selon la revendication 1, caractérisé en ce que des éléments filtrants A ou B de même forme géométrique se suivent à une distance qui correspond, au maximum, au double de l'épaisseur de l'élément filtrant.

4. Dispositif selon les revendications 1 à 3, caractérisé en ce que, comme élément filtrant pour un carter de préférence à section terminale circulaire, il est utilisé un disque plat, éventuellement entouré d'une bordure métallique en tant que support, constitué de toile métallique compressée et dont la forme est eventuellement maintenue stable par soudage ponctuel, soudage d'assemblage ou frittage qui, lors de la compression axiale, donne un manchon tressé en plusieurs couches constitué d'un fil métallique "sans fin", résistant aux températures élevées et résistant à la corrosion.

5. Dispositif selon les revendications 1 à 4, caractérisé en ce que le catalyseur pour l'élément filtrant A possède l'une des compositions a) à e) suivantes:

a)      oxyde de lithium,

b)      pentoxyde de vanadium,

c)      pentoxyde de vanadium plus oxyde d'un ou plusieurs des éléments:

Li, Na, K, Rb, Cs;
Mg, Ca, Sr, Ba;
B, Al;
Si, Sn;
Sb, Bi;
Cu, Ag;
Zn;
Sc, Y, La, Ce, Pr, Nd, Tb;
Ti, Zr, Hf;

Nb;
Cr, Mo, W;
Mn, Re;
Fe, Co, Ni, l'oxyde supplémentaire représentant de préférence 1 à 30 % en poids, par rapport à $V_2O_5$,

d) vanadate d'un ou de plusieurs des métaux énumérés en c) pour l'oxyde supplémentaire, et

e) perrhénate, de préférence de Li, K, Ag, V.

6. Dispositif selon la revendication 5, caractérisé en ce que le catalyseur est combiné avec un matériau de support résistant à la température, celui-ci étant soit mélangé avec le catalyseur, soit appliqué sur l'élément filtrant qui sert en tant que support pour le catalyseur.

7. Dispositif selon les revendications 1 à 6, caractérisé en ce qu'en tant que catalyseur pour l'élément filtrant B, il est utilisé un ou plusieurs éléments de la classe du platine conjointement avec un ou plusieurs métaux communs, en combinaison avec un matériau de support résistant à la température, de préférence MgO, $AlO_3$, en particulier $Al_2O_3$, $CeO_2$, $SiO_2$, $SuO_2$, $TiO_2$, $ZrO_2$, $HfO_2$, $ThO_2$, $NbO_5$, $WO_3$, le silicate de magnésium, le silicate d'aluminium et/ou le titanate de magnésium ou des combustions de ceux-ci, ce dernier étant soit mélangé avec le catalyseur, soit appliqué sur le filtre qui sert de support pour le catalyseur.

**Fig. 1**

0 154 145

Fig. 2

**Fig. 3**

Fig. 4

Fig. 5